(19) Europäisches Patentamt
European Patent Office
Office européen des brevets

(11) **EP 2 223 815 B1**

(12) **EUROPÄISCHE PATENTSCHRIFT**

(45) Veröffentlichungstag und Bekanntmachung des Hinweises auf die Patenterteilung:
**12.10.2011 Patentblatt 2011/41**

(51) Int Cl.:
***B60H 1/32*** *(2006.01)*

(21) Anmeldenummer: **10166312.8**

(22) Anmeldetag: **16.10.2008**

(54) **Vorrichtung zur Luftkonditionierung eines Kraftfahrzeuges**

Air conditioning device for a motor vehicle

Dispositif destiné au conditionnement d'air d'un véhicule automobile

(84) Benannte Vertragsstaaten:
**DE FR GB**

(30) Priorität: **16.10.2007 DE 102007049823**

(43) Veröffentlichungstag der Anmeldung:
**01.09.2010 Patentblatt 2010/35**

(62) Dokumentnummer(n) der früheren Anmeldung(en) nach Art. 76 EPÜ:
**08018143.1 / 2 050 601**

(73) Patentinhaber: **Behr GmbH & Co. KG**
**70469 Stuttgart (DE)**

(72) Erfinder:
• **Feuerecker, Günther**
**70567 Stuttgart (DE)**
• **Dürr, Gottfried**
**70437 Stuttgart (DE)**
• **Kemle, Andreas**
**71732 Tamm (DE)**
• **Walter, Christoph**
**70469 Stuttgart (DE)**

(74) Vertreter: **Grauel, Andreas**
**Behr GmbH & Co. KG**
**Intellectual Property, G-IP**
**Mauserstrasse 3**
**70469 Stuttgart (DE)**

(56) Entgegenhaltungen:
**EP-A- 1 719 650         DE-A1-102006 012 441**
**US-A1- 2006 254 308**

**Beschreibung**

Die Erfindung betrifft eine Vorrichtung zur Luftkonditionierung für ein Kraftfahrzeug nach dem Oberbegriff des Anspruchs 1.

Die EP 0 487 002 A2 beschreibt eine Klimaanlage für ein Kraftfahrzeug, bei der zur Verbesserung des Wirkungsgrades ein Ejektor verwendet wird. Der einen Kondensator verlassende Kältemittelstrom expandiert in dem Ejektor unter Aufnahme von Geschwindigkeit, wobei ein zweiter Kältemittelstrom angesaugt und zugemischt wird. Der zweite Strom kommt aus dem einzigen Verdampfer des Systems und erfährt insgesamt eine Druckerhöhung durch die Zuführung zum Ejektor. Zentrales Element für die Funktion ist zudem ein nach dem Ejektor angeordneter Phasentrenner, durch den ein flüssiger Teil abgetrennt und dem Verdampfer zugeführt wird, wogegen ein gasförmiger Teil des Kältemittels dem Verdichter zugeführt wird. Insgesamt liegt der Saugdruck am Verdichter hierdurch auf einem höheren Niveau als der Druck des Kältemittels nach Verdampfer. Die für eine sichere Funktion der Vorrichtung erforderliche vollständige Trennung nach gasförmiger und flüssiger Phase erfordert einen aufwendigen und viel Bauraum beanspruchenden Phasentrenner. Zudem ist die Anordnung der Leitungen aufwendiger als bei Klimaanlagen nach dem Stand der Technik.

Die DE 10 2005 021 396 beschreibt eine Vorrichtung zur Luftkonditionierung bei der zur Verbesserung des Wirkungsgrades ebenfalls ein Ejektor verwendet wird. Durch das Vorsehen eines zweiten Verdampfers wird zusätzlich erreicht, dass dem Teil des Kältemittels nach dem Ejektor, welches dem Verdichter zugeführt wird, ebenfalls eine Kühlleistung entnommen werden kann.

Die EP 1 719 650 beschreibt eine Vorrichtung zur Luftkondizionierung, die als nächstliegender Stand der Technik angesehen wird. Es ist Aufgabe der Erfindung, eine Vorrichtung zur Luftkonditionierung für ein Kraftfahrzeug zu schaffen, bei der die bekannten Vorrichtungen weitevrentwickelt werden.

Diese Aufgabe wird für eine eingangs genannte Vorrichtung mit den kennzeichnenden Merkmalen des Anspruchs 1 gelöst. Vorteilhafte Ausgestaltungen sind Gegenstand der Unteransprüche.

Erfindungsgemäß ist abströmsertig des zweiten Verdampfers ein dritter Verdampfer angeordnet. Bevorzugt bildet der zweite Verdampfer mit dem dritten Verdampfer eine Baueinheit Durch die benachbarte Anordnung des Ejektors zum ersten und/oder zweiten Verdampfer sind eine Verkürzung der zu- und abführenden Kältemittelleitungen und eine Minimierung von Umlenkungen möglich. Damit können neben einer Kostenersparnis und einer erheblichen Verringerung des Montageaufwandes große Druckabfälle und Entmischungseffekte des Kältemittels vermieden werden. Zusätzlich wird mit der erfindungsgemäßen Anordnung Bauraum eingespart.

Der Begriff "benachbart" ist erfindungsgemäß breit auszulegen. Erfindungsgemäß kann der Ejektor mit dem ersten und/oder zweiten Verdampfer eine Baueinheit bilden oder in unmittelbarer Nähe des ersten und/oder zweiten Verdampfers angeordnet sein.

Der Ejektor kann sich je nach bauraumbedingten Anforderungen oberhalb oder unterhalb des ersten und/oder zweiten Verdampfers befinden. In alternativer Ausführung kann der Ejektor in Einbaulage vor oder hinter dem ersten und/oder zweiten Verdampfer angeordnet sein. Hierbei ist eine Anordnun vorstellbar, bei der der Ejektor waagrecht, senkrecht oder diagonal verläuft.

In einer besonders bevorzugten Ausführungsform sind der erste und zweite Verdampfer als eine Baueinheit ausgebildet und insbesondere verlötet oder verschweißt oder durch ein anderes stoffschlüssiges Verfahren zusammengefügt.

Bevorzugt ist der zweite Verdampfer in Luftströmungsrichtung vor dem ersten Verdampfer angeordnet.

In einer weiteren Ausführungsform wird der erste und/oder zweite Verdampfer mehrflutig durchströmt. Mehrflutig im Sinne der Erfindung bedeutet, dass ein Verdampfer mindestens zwei Rohrgruppen oder Fluten aufweist, die von einem Kältemittel durchströmbar sind. Bevorzugt werden hierbei benachbarte Fluten entgegengesetzt durchströmt. Die einzelnen Fluten bestehen aus mehreren Rohren, insbesondere Flachrohren. Bevorzugt sind zwischen den Rohren, Rippen, insbesondere Wellrippen angeordnet, um den Wärmeübergang zwischen dem zu kühlenden Fluid, insbesondere Luft, und dem Kältemittel zu verbessern,

In einer weiteren Ausführungsform der Erfindung werden die beiden Verdampfer in Richtung senkrecht zu den Fluten entgegengesetzt durchströmt. Mit anderen Worten: Die jeweiligen Ausgänge der beiden Verdampfer befinden sich auf unterschiedlichen Seiten. Durch eine derartige erfindungsgemäße Durchströmung der beiden Verdampfer können Überhitzungszonen, die sich bei bestimmten Betriebszuständen im Verdampfer ausbilden teilweise oder gänzlich aufgehoben werden. Somit wird ein homogenes Temperaturprofil des zu kühlenden Fluides erreicht.

In einer alternativen Ausführungsform der Erfindung ist abströmseitig des Ejektors ein Trennelement angeordnet. Das Trennelement kann beispielsweise als Rohrverzweigung, Umlenkblech, Vlies oder Gitter ausgebildet sein. Selbstverständlich ist auch ein beliebig anderes Element vorstellbar, das den Kältemittelstrom in einen ersten zum ersten Verdampfer strömenden Teilstrom und in einen zweiten zum zweiten Verdampfer strömenden Teilstrom aufteilt. Die Auftrennung der beiden Teilströme kann derart erfolgen, dass der erste Teilstrom einen im Wesentlichen gleichen oder einen größeren Flüssigkeitsanteil besitzt als der zweite Teilstrom.

In einer weiteren Ausführungsform ist abströmseitig des ersten Trennelementes und zuströmseitig des ersten Verdampfers ein zweites Trennelement, insbesondere ein phasenseparierendes Trennelement, angeordnet. Besonders bevorzugt ist das zweite Trennelement kommunizierend mit einer Leitung verbunden, die den zweiten und dritten Verdampfer kommunizierend miteinander verbindet. Durch diese Anordnung können flüssigkeitsanteile des ersten Teilstromes, die nicht im ersten Verdampfer abgeschieden werden, im dritten Verdampfer verdampfen und somit zur Optimierung des Gesamtsystems beitragen.

In einer weiteren Ausführungsform ist abströmseitig des zweiten oder des dritten Verdampfers und zuströmseitig des Verdichters ein Sammler und/oder ein innerer Wärmeübertrager angeordnet.

In vielen Versuchen hat sich herausgestellt, dass eine etwaige Überhitzungszone am luftaustrittsseitigen Verdampfer (erster Verdampfer) sich negativ auf einen Leistungsgewinn des Ejektors auswirkt.

Es wird daher ein Verfahren vorgeschlagen, bei dem ein Durchflusswert eines Drosselelementes zuströmseitig des ersten Verdampfers derart eingestellt wird, dass am ersten Verdampfer in allen Betriebspunkten keine Überhitzungszone auftritt. Der Durchflusswert ist hierbei abhängig vom verwendeten Kältemittel und ob zuströmseitig des Drosselelementes eine Phasentrennung vorgesehen ist oder nicht.

Für verschiedene Kältemittel ergeben sich folgende Durchflusswerte für das Drosselelement, wobei der Durchflusswert durch eine Kennzahl A

$$A = m/\sqrt{(d*p)}$$

m: Massenstrom
d: Dichte des kältemittels
p: Druckabfail über das Drosselelement
definiert ist.

Tabelle 1: (keine Phasentrennung, 50% Dampfgehalt des Kältemittels)

| Kältemittel | Durchflusskennzahl (mm$^2$) | Referenzdruck vor dem Drosselelement (bar) |
|---|---|---|
| R134a | 26 | 3 |
| R1234yf | 34,7 | 3,1 |
| R744 | 2,4 | 35 |

Tabelle 2: (Phasentrennung, flüssiges Kältemittel)

| Kältemittel | Durchflusskennzahl A (mm$^2$) | Referenzdruck vor dem Drosselelement (bar) |
|---|---|---|
| R134a | 1,9 | 3 |
| R1234yf | 2,4 | 3,1 |
| R744 | 0,42 | 35 |

Derartige Durchflusskennzahlen beziehen sich auf eine Vorrichtung zur Luftkonditionierung mittlerer Leistungsklasse. Typische Werte der Durchflusskennzahl A für kleinere und größere Leistungsklasse bewegen sich in einem Bereich von 0,1*A bis 10*A, bevorzugt in einem Bereich 0,5*A bis 2*A.

Die Durchflusskennzahl A des Drosselelementes wird bevorzugt im Betrieb nicht verändert und bezieht sich beispielsweise auf ein Ventil mit Blende.

Alternativ kann jedoch auch ein Drosselelement mit im Betrieb verstellbarer Durchflusskennzahl eingesetzt werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegende Erfindung zu verlassen.

Weitere wichtige Merkmale der vorliegenden Erfindung ergeben sich aus der nachfolgenden detaillierten Beschreibung in Verbindung mit den Ansprüchen und den Zeichnungen.

Nachfolgend werden bevorzugte Ausführungsbeispiele einer erfindungsgemäßen Vorrichtung zur Luftkonditionierung beschrieben und anhand der anliegenden Zeichnungen näher erläutert.

Es zeigen:

Fig. 1 eine schematische Darstellung einer Vorrichtung zur Luftkonditionierung nach dem Stand der Technik;

Fig. 2 einen schematischen Ausschnitt eines erstes Ausführungsbeispiel einer nicht erfindungsgemäßen Vorrichtung zur Luftkonditionierung;

Fig. 3 einen schematischen Ausschnitt eines zweites Ausführungsbeispiel einer nicht erfindungsgemäßen Vorrichtung;

Fig. 4 einen schematischen Ausschnitt eines dritten Ausführungsbeispiels einer nicht erfindungsgemäßen Vorrichtung;

Fig. 5 einen schematischen Ausschnitt eines vierten Ausführungsbeispiels einer nicht erfindungsgemäßen Vorrichtung;

Fig. 6 einen schematischen Ausschnitt eines fünften Ausführungsbeispiels einer nicht erfindungsgemäßen Vorrichtung;

Fig. 7 eine schematische Darstellung eines sechsten Ausführungsbeispiels einer nicht erfindungsgemäßen Vorrichtung;

Fig. 8 eine schematische Darstellung eines siebenten Ausführungsbeispiels einer erfindungsgemäßen Vorrichtung;

Fig. 9 eine schematische Darstellung eines achten Ausführungsbeispiels einer erfindungsgemäßen Vorrichtung;

Fig. 10 einen schematischen Ausschnitt eines neunten Ausführungsbeispiels einer erfindungsgemäßen Vorrichtung;

Fig. 11 einen schematischen Ausschnitt eines zehnten Ausführungsbeispiels einer erfindungsgemäßen Vorrichtung;

Fig. 12 eine Detailansicht eines erfindungsgemäßen Trennelementes;

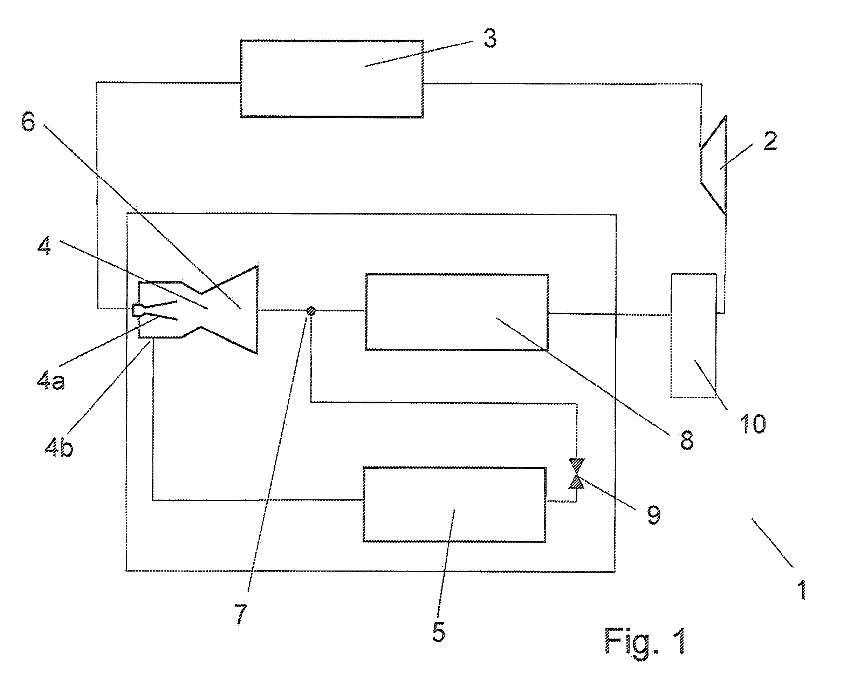

Fig. 1 zeigt eine schematische Darstellung einer Vorrichtung zur Luftkonditionierung 1 nach dem Stand der Technik. Eine derartige Vorrichtung besteht aus einem Verdichter 2, welcher ein Kältemittel von einem expandierte in einen komprimierten Zustand überführt. Dem Verdichter nachgeschaltet ist ein Wärmeüberträger 3, insbesondere ein Kondensator, der die bei der Kompression des Kältemittels erzeugte Wärme an die Umgebung abführt. Dem Warmeübertrager folgt abströmseitig ein als Ejektor 4 ausgebildetes Expansionselement. Der Ejektor besitzt einen als Düse ausgeformten ersten Eingang 4a für ein Kältemittel, in der das Kältemittel zunächst in einem stark gerichteten Strahl entspannt und beschieunigt wird. Nachfolgend mischt sich dieser Strahl mit Kältemittel aus einem in einen zweiten Eingang 4b in den Ejektor mündenden Zweiges eines ersten Verdampfers 5. Bei dem Ansaugen des Kältemittels aus dem zweiten Eingang 4b wird mechanische Arbeit des gerichteten schnellen Strahls der Düse beziehungsweise des ersten Eingangs 4a genutzt, Die Vermischung der beiden Strahlen und die anschließende Expansion des gerichteten gemischten Strahls in einem Diffusor 6 des Ejektors 4 führen zu einem Druckanstieg des Gemisches. Dieses Gemisch enthält flüssige und gasförmige Phase des Kältemittels. Nach dem Verlassen des Ejektors tritt das Kältemittel in ein Trennelement 7 ein. Hierbei wird der erste Verdampfer 5 mit einem Teil des in das Trennelement 7 eintretenden Kältemittels beschickt. Der restliche Anteil wird einem zweiten Verdampfer 8 zugeführt. Dort wird durch Verdampfung der flüssigen Anteile und entsprechendem Wärmeaustausch mit zu klimatisierender Luft eine Kühlleistung des Gesamtsystems erzeugt. Je nach Gestaltung des Trennelementes kann der Anteil flüssigen Kältemittels in den beiden Teilströmen gleich oder auch unterschiedlich sein, wobei eine Anreicherung der flüssigen Phase des Teilstroms zum ersten Verdampfer 5 vorteilhaft ist. Dem zweiten Verdampfer 8 ist ein Niederdrucksammler 10 nachgeordnet, dem wiederum die Saugseite des Verdichters 2 folgt. Zuströmseitig des ersten Verdampfers 5 ist ein Expansionsorgan 9 angeordnet, in dem das Kältemittel auf einen niedrigen Verdampfungsdruck entspannt wird.

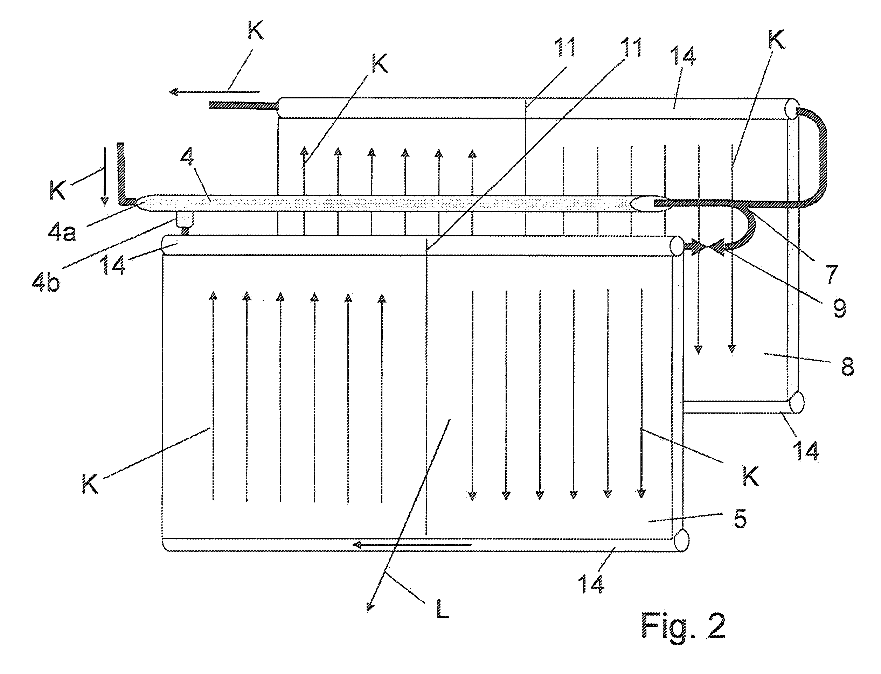

In Fig. 2 ist ein erstes Äusführungsbeispiel einer nicht erfindungsgemäßen Vorrichtung zur Luftkonditionierung schematisch dargestellt. Diese Ausführungform unterscheidet sich vorn Stand der Technik insbesondere dadurch, dass der Ejektor 4 benachbart zum ersten Verdampfer 5 angeordnet ist in nicht gezeigten Ausführungsbeispielen ist eine beliebige Anordnung des Ejektors denkbar, wobei der Ejektor in Fig. 2 nur schematisch dargestellt ist und eine beliebige Ausgestaltung nach dem Stand der Technik aufweisen kann. Beispielsweise kann der Ejektor oberhalb oder unterhalt des ersten oder zweiten Verdampfers angeordnet sein. Selbstverständlich ist es auch möglich, den Ejektor abhängig von der Anschlusssituation vor oder hinter dem ersten oder zweiten Verdampfer waagerecht, senkrecht oder diagonal anzuordnen. In einer besonders bevorzugten nicht dargestellten Ausführungsform bilden der erste und zweite Verdampfer und der Ejektor eine Baueinheit

Der erste und zweite Verdampfer weisen jeweils einen oberen und unteren Sammelkanal 14 und Trennwände 11 auf, so dass die beiden Verdampfer mehrflutig mit Kältemittel (durch Pfeile K angedeutet) durchströmt werden. Die beiden Verdampfer werden mit zu kühlender Luft (durch Pfeil L angedeutet) beströmt, wobei der zweite Verdampfer 8 in Luftströmungsrichtung vor dem ersten Verdampfer 5 angeordnet ist.

Ferner weist die Vorrichtung ein Trennelement 7 auf, das den Kältemittelstrom in einen ersten zum ersten Verdampfer 5 strömenden Teilstrom und einen zweiten zum zweiten Verdampfer 8 strömenden Teilstrom trennt. Die Auftrennung der beiden Ströme zu den beiden Verdampfern kann derart erfolgen, dass keine wesentlichen Unterschiede ihm Flüssigkeitsgehalt entstehen oder dass der Flüssigkeitsgehalt des ersten Teilstromes größer ist als der Flüssigkeitsgehalt des zweiten Teilstromes, Die Auftrennung erfolgt im einfachsten Fall durch eine Rohrverzweigung oder beispielsweise durch ein vertikales Leitblech, solange der Kältemittelstrom noch entlang der Hauptachse des Ejektors strömt. Für den Fall dass der erste Teilstrom einen höheren Flüssigkeitsgehalt aufweisen soll als der zweite Teilstrom, können phasentrenhende Elemente Wie Umlenkbleche, Vliese, Gitter oder sonstige Packungen angeordnet sein.

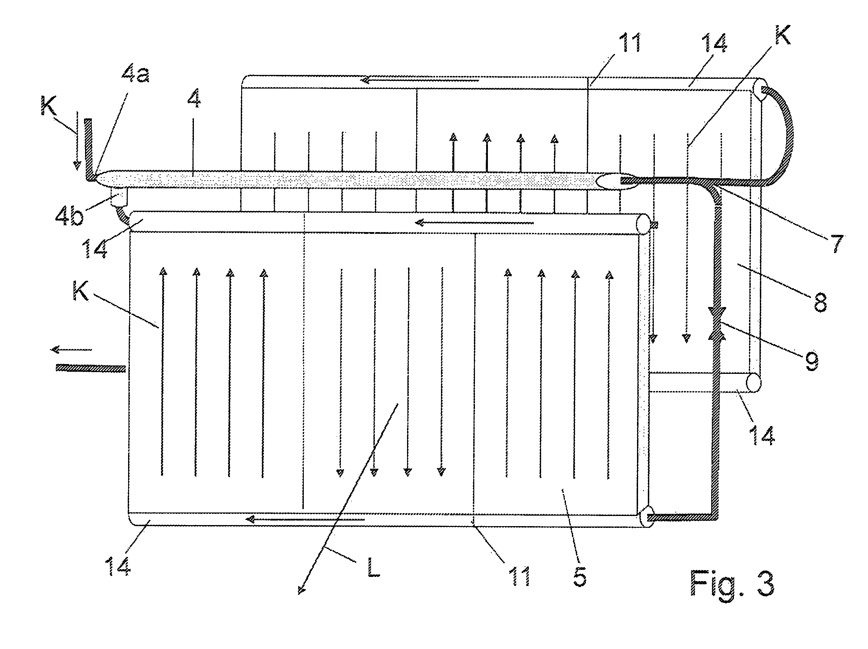

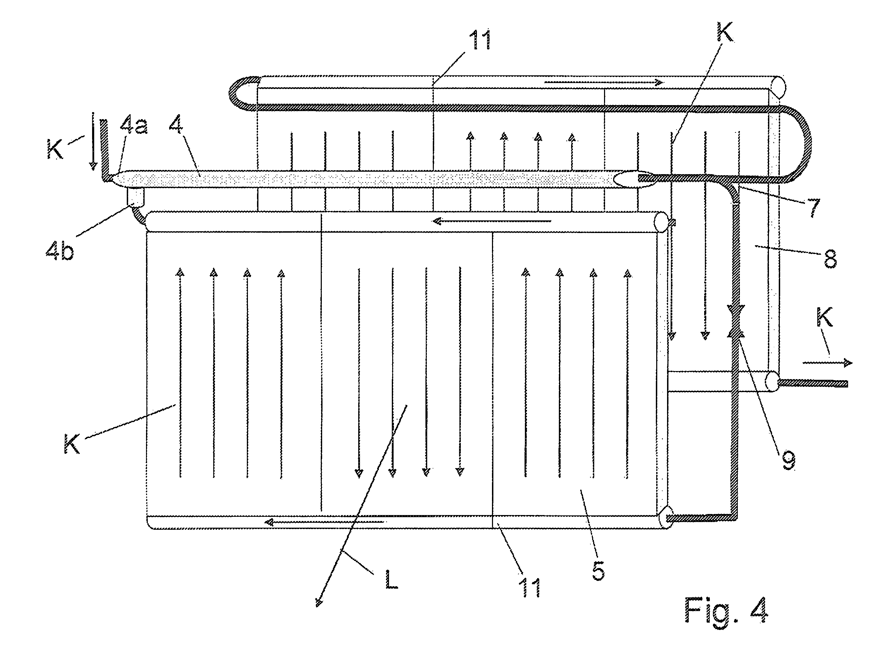

Die Fig. 3 und Fig. 4 zeigen zwei weitere Ausführungsbeispiele einer nicht erfindungsgemäßen Vorrichtung zur Luftkonditionierung. In beiden Ausführungsbeispielen werden die beiden Verdampfer in drei Fluten durchströmt. Selbstverständlich ist in einem nicht dargestellten Ausführungsbeispiel eine Durchströmung der Verdampfer in vier, fünf, sechs oder eine beliebigen anderen Anzahl von Fluten möglich, wobei die beiden Verdampfer jeweils eine gleiche oder verschiedene Anzahl an Fluten aufweisen können. In Fig. 4 werden Fluten des ersten und zweiten Verdampfers, die in Luftströmungsrichtung hintereinander angeordnet sind, entgegengesetzt durchströmt. Zusätlich sind die Kältemittelaustritte an unterschiedlichen Seiten angeordnet. Eine derartige Anordnung hat den Vorteil, dass somit auch Überhitzungszonen, die sich im Bereich der Kältemittelaustritte der Verdampfer ausbilden, an unterschiedlichen Seiten des Verdampfers auftreten, so dass sich deren Einfluss auf das Temperaturprofil der zu kühlenden Luft nicht verstärkt, sondern teilweise oder zur Gänze aufhebt.

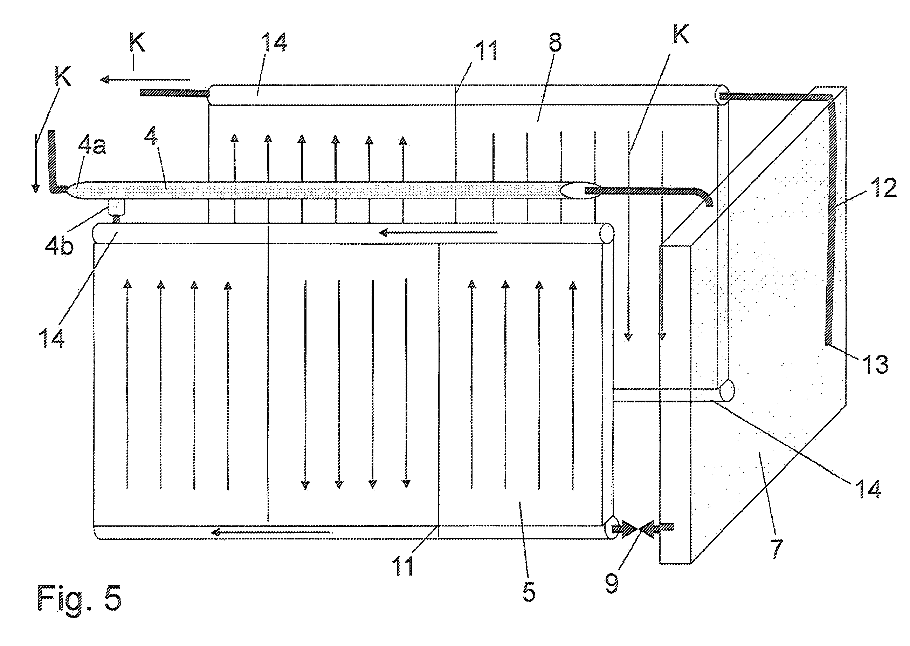

Fig. 5 zeigt insbesondere eine weitere Ausführungsform eines Trennelementes 7. Die abgeschiedene Flüssigkeit sammelt sich im unteren Bereich des Trennelementes und wird von dort über das Expansionsorgan 9 dem ersten Verdampfer 5 zugeführt. Die Ansaugung des Kältemittels zum zweiten Verdampfer 8 erfolgt über eine Ansaugleitung 12, die in den oberen Sammelkanal 14 des zweiten Verdampfers mündet. In einem nicht gezeigten Ausführungsbeispiel kann das Ende der Ansaugleitung 13 geodätisch niedriger angebracht sein, so dass für den Fall, dass mehr Flüssigkeit abgeschieden wird, als durch das Expansionsorgan 9 abfließt; der restliche Teil der Flüssigkeit in den zweiten Verdampfer 8 abfließen kann, bevor das große Volumen des Trennelementes gefüllt ist. Durch eine derartige Anordnung lassen sich Kältemittelverlagerungen im Kältemittelkreislauf reduzieren.

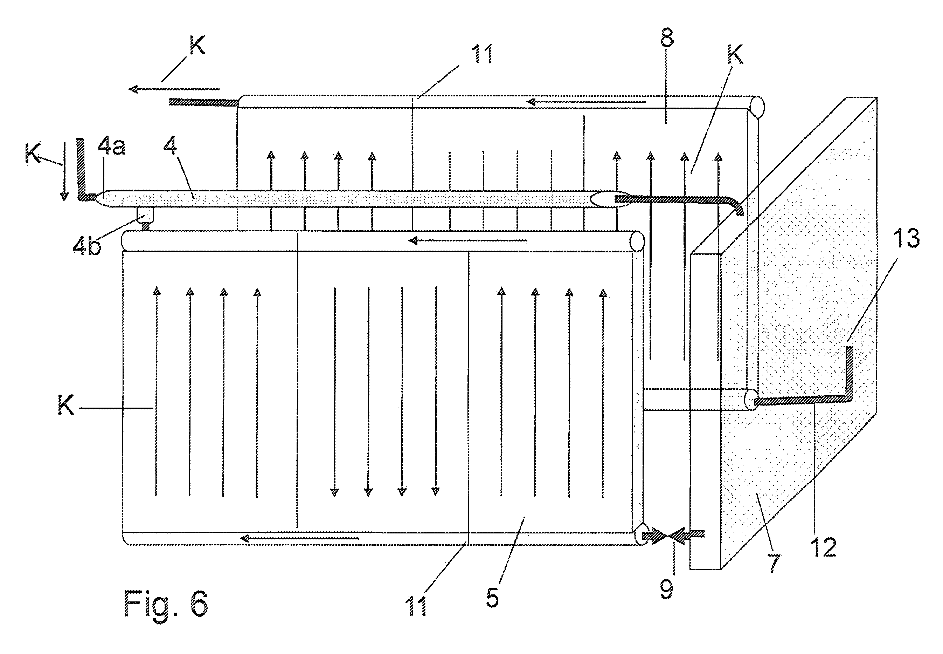

Fig. 6 zeigt insbesondere eine weitere Ausführungsform eines Trennelementtes 7. In dieser Ausführungsform erfolgt die Ansaugung des Kältemittels zum zweiten Verdampfer über eine Ansaugleitung 12, die in den unteren Sammelkanal 14 des zweiten Verdampfers mündet. Die Kältemittelansaugung des zweiten Verdampfers 8 ist hierbei geodätisch höher als die des ersten Verdampfers 5, so dass in den ersten Verdampfer immer bevorzugt flüssiges Kältemittel strömt. Zusätlich kann das Ende der Ansaugleitung 13 derart gestaltet sein, dass nicht schlagartig Flüssigkeit in den zweiten Verdampfer 8 angesaugt wird. Beispielsweise kann das Ende der Ansaugleitung geschlitzt sein oder mehrere Einlaufbchrungen aufweisen. In einem nicht gezeigten Ausführungsbeispiel können mehrere Ansaugleitungen 12 an verschiedenen Stellen des Trennelementes 7 angebracht sein. Mehrere Ansaugleitungen können auch in den Ausführungsformen gemäß Fig. 5, Fig. 10 und Fig. 11 an verschiedenen Stellen des Trennelmentes 7 angebracht sein.

In einem weiteren nicht gezeigten Ausführungsbeispiel weist das Trennelement 7 Einbauten, beispielsweise Bleche, auf, die ein Schwappen der Flüssigkeit verhindern.

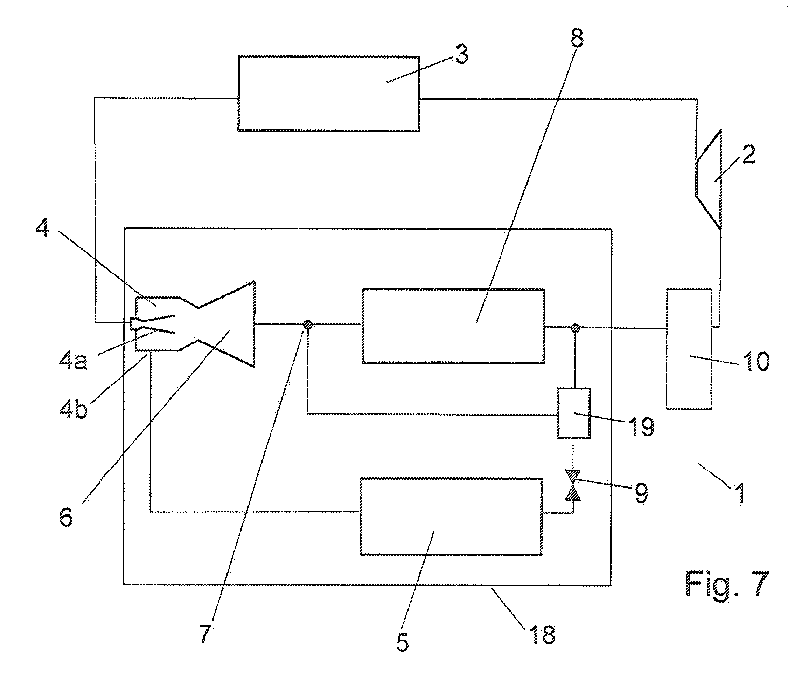

Fig. 7 zeigt ein weiteres Ausführungsbeispiel einer nicht erfindungsgemäßen Vorrichtung. Diese Vorrichtung weist ein zweites Trennelement 19, insbesondere ein phasenseparierendes Trennelement, auf. Das erste Trennelement 7 kann als Rohrverzweigung ausgebildet sein, so dass der erste und zweite Teilstrom abströmseitig des ersten Trennelementes 7 im Wesentlichen einen gleich großen Flüssigkeitsgehalt aufweisen können. Das zweite Trennelement 19 ist kommunizierend mit einer Leitung verbunden, die den zweiten Verdampfer 8 abströmseitig mit dem Niederdrucksammler 10 kommunizierend verbindet, so dass der im zweiten Trennelement 19 abgeschiedene Dampf abströmseitig des zweiten Verdampfers 8 eingespeist wird. Eine derartige Anordnung hat den Vorteil, dass das zweite Trennelement 19 mit einem Druckabfall in der gleichen Größe wie im zweiten Verdampfer 8 betrieben werden kann.

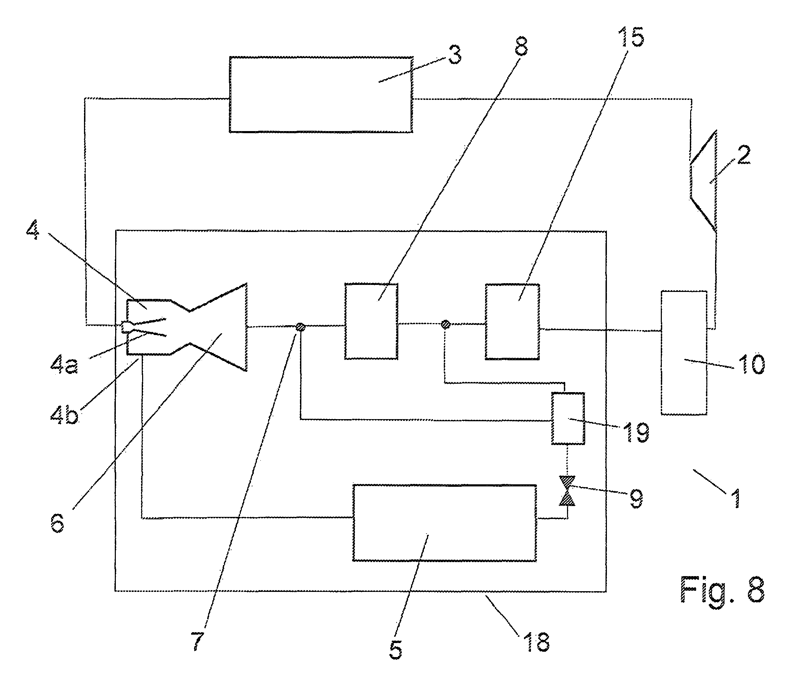

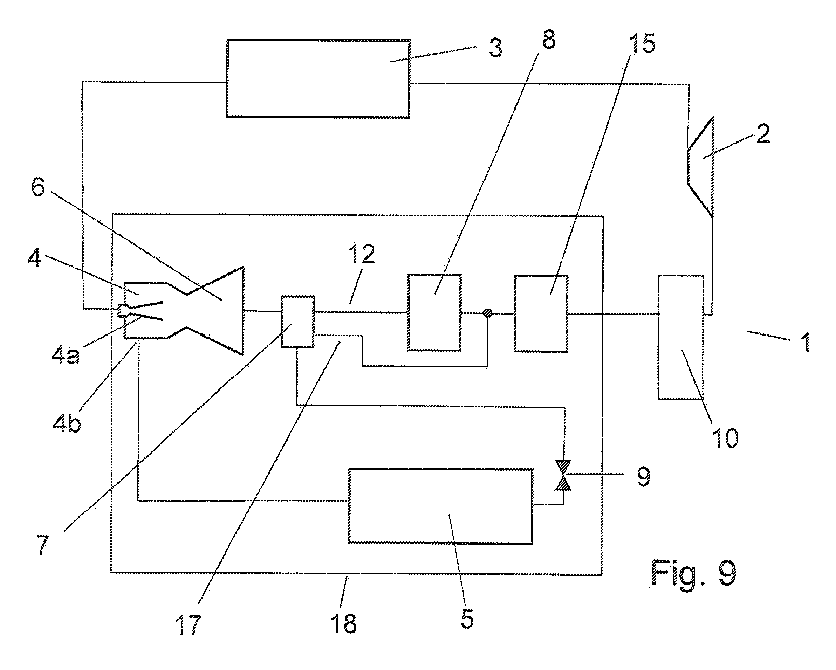

Die Fig. 8 und Fig. 9 zeigen eine Weiterbildung der Ausführungsform gemäß Fig. 7. In beiden Ausführungsformen ist erfindurgsgemäß abströmseltig des zweiten Verdampfers 8 ein dritter Verdampfer 15 angeordnet. In der Ausführungsförm gemäß Fig. 8 ist das zweite phasenseparierende Trennelement 19 kommunizierend mit einer Leitung verbunden, die den zweiten und dritten Verdampfer kommunizierend verbindet. Falls somit die abgeschiedene Flüssigkeitsmenge im Trennelement 19 größer ist als die in den ersten Verdampfer 5 eingebrachte Flüssigkeitsmenge, kann diese dem dritten Verdampfer 15 zugeführt werden. Das phasenseparierende Trennelement 19 kann damit mit einem Druckabfall entsprechend dem zweiten Verdampfer 8 betrieben werden. In der Ausführungsform gemäß Fig. 9 ist das erste phasenseparierende Trennelement 7 durch eine Leitung 17 kommunizierend mit einer Leitung verbunden, die den zweiten und dritten Verdampfer kommunizierend verbindet., Hierbei kann auf das zweite Trennelement 19 verzichtet werden,

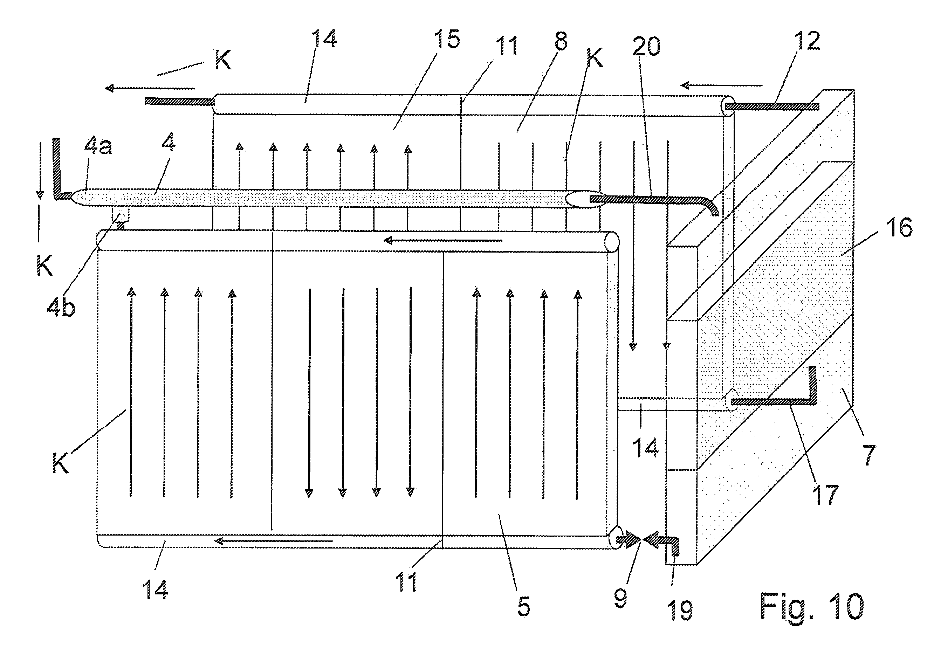

Fig. 10 zeigt eine weitere Ausführungsform, beziehungsweise eine Konkretisierung der Ausführungsform gemäß Fig. 9, in der der zweite 8 und dritte 15 Verdampfer eine Baueinheit bilden, so dass eine kompakte und bauraumsparende Ausführung möglich ist. Das phasenseparierende erste Trennelement 7 weist hierbei eine dichte Packung aus Vlies oder anderen phasenseparierenden Packungen 16 auf. Die Leitung 17 mündet in den unteren Sammelkanal 14 des zweiten Verdampfers 8.

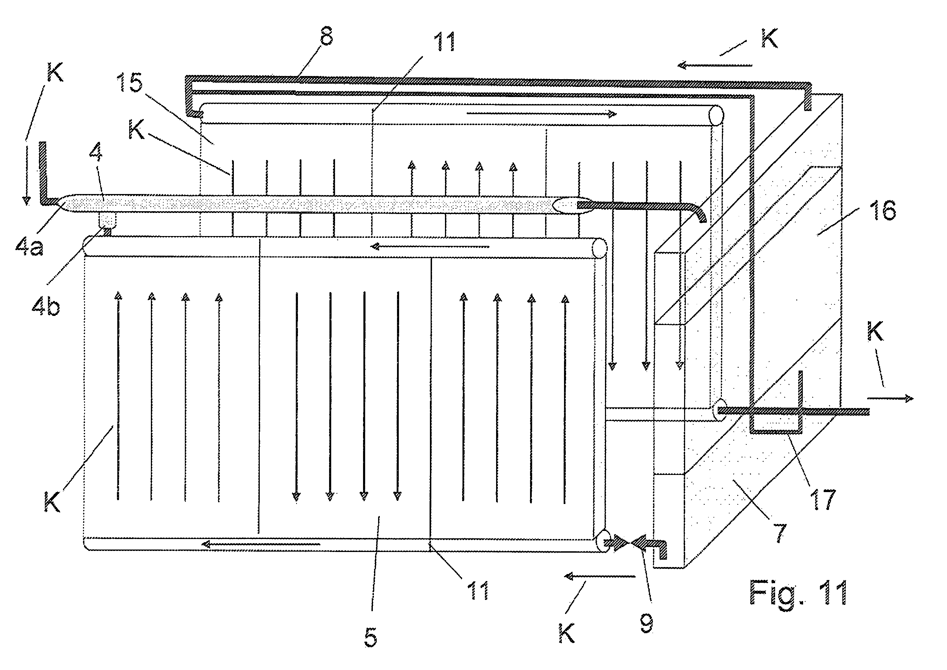

In einer Weiterführung der Ausführungsform gemäß Fig, 9 kann der zweite Verdampfer 8 auch als Rohrleitung zum dritten Verdampfer 15 ausgebildet sein. Eine derartige Ausführungsform, die in Fig. 11 gezeigt wird, ist insbesondere dann vorteilhaft, wenn konstruktive Verhältnisse bereits einen erheblichen Druckverlust einer derartigen Leitung zwischen dem Trennelement 7 und dem dritten Verdampfer 15 ergeben.

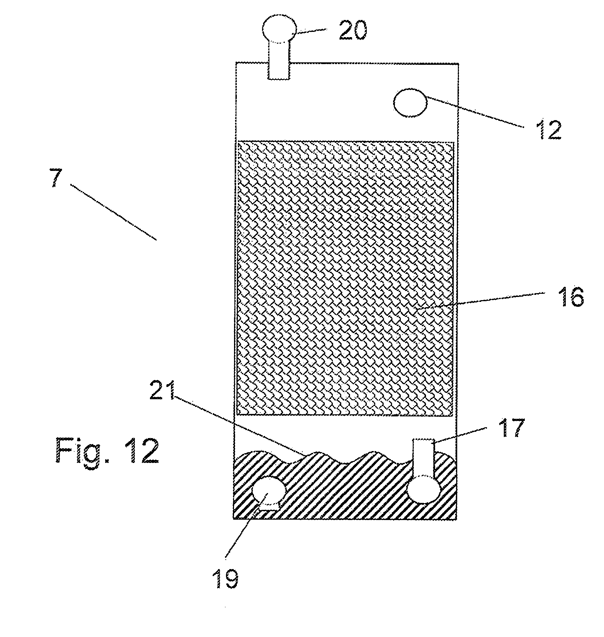

Fig. 12 zeigt eine Detailansicht eines erfindungsgemäßen ersten Trennelementes 7 mit den entsprechenden Zuleitungen und Ableitungen, die in Fig. 10 dargestellt sind. Für den Fachmann ist leicht ersichtlich, dass primär Flüssigkeit durch die Leitung 19 in den ersten Verdampfer 5 abgesaugt wird, da das Ende der Leitung 17 über dem Flüssigkeitsspiegel 21 liegt.

In einer besonders bevorzugten Ausführungsform können sowohl der Ejektor als auch der erste, zweite und dritte Verdampfer, das Expansionsorgan 9 und das erste und/oder zweite Trennelement zu einer Baueinheit 18 ausgebildet sein.

Die erfindungsgemäße Vorrichtung ist nicht auf ein bestimmtes Kältemittel beschränkt. Beispielsweise eignet sich die Vorrichtung neben dem Kältemittel R134a auch für das Kältemittel R744. In erstem und insbesondere in zweitem Falle umfasst die Vorrichtung einen inneren Wärmeübertrager, der den Wirkungsgrad weiter verbessert.

Anstatt des Niederdrucksammlers 10 wäre auch eine Ausführungsform mit einem Hochdrucksammler und einer Überhitzungsregelung denkbar.

## Patentansprüche

1. Vorrichtung zur Luftkonditionierung für ein Kraftfahrzeug (1), umfassend einen Verdichter (2) zur Kompression eines saugseitig zugeführten Kältemittels, einem dem Verdichter in Flußrichtung des Kältemittels nachgeordneten Wärmeübertrager (3), insbesondere einen Kondensator, einen dem Kühlen nachgeordnete Ejektor (4), wobei der Ejektor einen ersten Eingang (4a) zur Zuführung von Kältemittel aus dem Wärmeübertrager (3) und zumindest einen zweiten Eingang (4b) zur Zuführung von Kältemittel in einem zum ersten Eingang unterschiedlichen, insbesondere hinsichtlich des Drucks verschiedenen Zustand aufweist und wobei der Ejektor (4) einen Ausgang zum Auslass eines Gemisches der beiden Eingänge aufweist und einen ersten Verdampfer (5), wobei zumindest ein Teil des aus dem Ausgang ausgelassenen Kältemittel dem ersten Verdampfer (5) zuführbar ist und wobei das den ersten Verdampfer erfassende Kältemittel zumindest teilweise dem zweiten Eingang (4b) des Ejektors (4) zuführbar ist und einen zweiten Verdampfer (8), wobei ein Teil des aus dem Ausgang des Ejektors (4) ausgelassenen Kältemittel dem zweiten Verdampfer (8) zuführbar ist und das den zweiten Verdampfer verlassende Kältemittel der Saugseite des Verdichter zuführbar ist, wobei der erste und zweite Verdampfer mit einem zu kühlenden Fluid, insbesondere Luft, beströmt werden, wobei der Ejektor benachbart zum ersten und/oder zweiten Verdampfer angeordnet ist, **dadurch** gekennzeichnest, dass ein dritter Verdampfer (15) abströmseitig des zweiten Verdampfers (8) angeordnet ist.

2. Vorrichtung nach Anspruch 1, **dadurch gekennzeichnet, dass** der erste (5) und zweite (8) Verdampfer eine Baueinheit bilden.

3. Vorrichtung nach einem der vorhergehenden Ansprüche, **dadurch gekennzeichnet, dass** Trennwände (11) im ersten und zweite Verdampfer detail angeordnet sind, dass der Verdampfer mehrflutig mit Kältemittel durchströmt wird.

4. Vorrichtung nach Anspruch 3, **dadurch gekennzeichnet, dass** beachbarte Fluten eines Verdampfers jeweils entgegengesetzt durchströmt werden.

5. Vorrichtung nach Anspruch 3 oder 4, **dadurch gekennzeichnet, dass** der erste und zweite Verdampfer in Richtung senkrecht zu den Fluten entgegengesetzt durchströmt werden.

6. Vorrichtung nach Anspruch 1, **dadurch gekennzeichnet, dass** der zweiten und dritte Verdampfer als eine Baueinheit ausgebildet sind.

**7.** Vorrichtung nach einem der vorhergehenden Ansprüche, **dadurch gekennzeichnet, dass** ein erstes Trennelement (7) abströmseitig des Ejektors (4) angeordnet ist, das den Kältemittelstrom in einen ersten Teilstrom und einen zweiten Teilstrom aufteilt.

**8.** Vorrichtung nach Anspruch 7, **dadurch gekennzeichnet, dass** der Flüssigkeitsgehalt des ersten Teilstromes größer oder im Wesentlichen gleich dem Flüssigkeitsgehalt des zweiten Teilstromes ist.

**9.** Vorrichtung nach einem der Ansprüche 7 oder 8, **dadurch gekennzeichnet, dass** das erste Trennelement eine Baueinheit mit dem Ejektor (4) bildet.

**10.** Vorrichtung nach einem der Ansprüche 7 bis 9, **dadurch gekennzeichnet, dass** das Trennelement kommunizierend mit einer Leitung verbunden ist, die den zweiten und dritten Verdampfer kommunizierend verbindet.

**11.** Vorrichtung nach einem der vorhergehenden Anspruche, **dadurch gekennzeichnet, dass** ein zweites Trennelement (19) abstromseitig des ersten Trennelementes und zuströmseitig des ersten Verdampfers angeordnet ist.

**12.** Vorrichtung nach Anspruch 11, **dadurch gekennzeichnet, dass** das zweite Trennelement kommunizierend mit einer Leitung verbunden ist, die den zweiten und dritten Verdampfer kommunizierend verbindet.

**13.** Vorrichtung nach Anspruch 11, **dadurch gekennzeichnet, dass** das zweite Trennelement mit einer Leitung verbunden ist, die den zweiten Verdampfer mit dem Verdichter kommunizierend verbindet.

**14.** Verfahren, zum Betreiben einer Vorrichtung nach einem der vorhergehenden Ansprüche, **dadurch gekennzeichnet, dass** ein Drosselelement (9) zuströmseitig des ersten Verdampfers (5) angeordnet ist und eine Durchflusskennzahl A des Drosselelementes derart eingestellt wird, dass am ersten Verdampfer (5) in allen Betriebspunkten der Vorrichtung keine Oberhitzungszone auftritt.

**Claims**

**1.** An air conditioning device for a motor vehicle (1), comprising a compressor (2) for compressing a refrigerant which is supplied on the suction side, a heat exchanger (3), in particular a condenser, disposed downstream of the compressor in the flow direction of the refrigerant, an ejector (4) disposed downstream of the radiator, wherein the ejector comprises a first inlet (4a) for the inflow of refrigerant from the heat exchanger (3) and at least one second inlet (4b) for the inflow of refrigerant in a state that differs from the first inlet and differs in terms of pressure in particular, and wherein the ejector (4) comprises an outlet for the emission of a mixture of the two inlets, and comprising a first evaporator (5), wherein at least a portion of the refrigerant emitted from the outlet can be supplied to the first evaporator (5), and wherein the refrigerant leaving the first evaporator can be supplied, at least partially, to the second inlet (4b) of the ejector (4), and comprising a second evaporator (8), wherein a portion of the refrigerant emitted from the outlet of the ejector (4) can be supplied to the second evaporator (8), and the refrigerant leaving the second evaporator can be supplied to the suction side of the compressor, wherein the first and the second evaporator are passed through by a fluid to be cooled, air in particular, wherein the ejector is disposed adjacently to the first and/or the second evaporator, **characterized in that** a third evaporator (16) is disposed on the outflow side of the second evaporator (8).

**2.** The device according to claim 1, **characterized in that** the first (5) and the second (8) evaporator form one assemble.

**3.** A device according to any one of the preceding claims, **characterized in that** partitions (11) are disposed in the first and second evaporators such that the refrigerant flows through the evaporator in a plurality of passes.

**4.** The device according to claim 3, **characterized in that** flow occurs in opposite directions in adjacent passes of an evaporator.

**5.** The device according to claim 3 or 4, **characterised in that** the flows through, the first and the second evaporator occur in opposite directions in a direction perpendicular to the passes.

**6.** The device according to claim 1, **characterized in that** the second and the third evaporator are designed as one assembly.

7. It device according to any one of the preceding claims, **characterized in that** a first separating element (7) is disposed on the outflow side of the ejector (4) and divides the refrigerant flow into a first partial stream and a second partial stream,

8. The device according to claim 7, **characterized in that** the fluid content of the first, partial stream is greater than or substantially equal to the fluid content of the second partial stream.

9. The device according to either claim 7 or 8, **characterized in that** the first separating element forms an assembly with the ejector (4).

10. A device according to any one of claims 7 to 9, **characterized in that** the separating element is connected in a communicating manner to a line that connects the second and the third evaporator in a communicating manner.

11. A device according to any one of the preceding claims, **characterized in that** a second separating element (19) is disposed on the outflow side of the first separating element and on the inflow side of the first evaporator.

12. The device according to claim 11, **characterized in that** the second separating element is connected in a communicating manner to a line that connects the second and the third evaporator in a communicating manner.

13. The device, according to claim 11, **characterized in that** the second separating element is connected to a line that connects the second evaporator to the compressor in a communicating manner.

14. A method for operating a device according to any one of the preceding claims, **characterized in that** a throttle element (9) is disposed on the inflow side of the first evaporator (5), and a flow factor A of the throttle element is set such that an overheating zone does not occur at the first evaporator (5) at any operating point of the device.

**Revendications**

1. Dispositif servant au conditionnement d'air pour un véhicule automobile (1), comprenant un compresseur (2) servant à à compression d'un fluide frigorigène acheminé côté aspiration, un échangeur de chaleur (13), en particulier un condenseur disposé en aval du compresseur dans la direction d'écoulement du fluide frigorigène, un éjecteur (4) disposé en aval du refroidisseur, où l'éjecteur présente une première entrée (4a) servant à l'alimentation en fluide frigorigène provenant de l'échangeur de chaleur (3) et au moins une deuxième entrée (4b) servant à l'alimentation en fluide frigorigène dans un état, différent de celui de la entrée, se différenciant notamment concernant la pression, et où l'éjecteur (4) présente une sortie servant à l'évacuation d'un mélange des deux entrées, et comprenant un premier évaporateur (5), ou au moins une partie du fluide frigorigène évacuée de la sortie peut être fournie au premier évaporateur (5) et où le fluide frigorigène sortant du premier évaporateur peut être fourni an moins partiellement à la deuxième entrée (4b) de l'éjecteur (4), et comprenant un deuxième évaporateur (8), où une partie du fluide frigorigène évacuée de la sortie due l'éjecteur (4) peut être fourni au deuxième évaporateur (8), et le fluide frigorigène sortant du deuxième évaporateur peut être fourni au côté aspiration du compresseur, où le premier et le deuxième évaporateurs sont alimentés par un fluide à refroidir, en particulier de l'air, où l'éjecteur est dispose en étant à proximité du premier et / ou du deuxième évaporateur, **caractérisé en ce qu'**un troisième évaporateur (15) est disposé côté sortie de flux dru deuxième évaporateur (8),

2. Dispositif selon la revendication 1, **caractérisé en ce que** le premier (5) et le deuxième (8) évaporateurs forment une ensemble unitaire.

3. Dispositif selon l'une quelconque des revendications précédentes, **caractérisé en ce que** des parois de séparation (11) sont disposées dans le premier et le deuxième évaporateurs, de manière telle que l'évaporateur soit traversé par du fluide frigorigène circulant dans plusieurs groupes de tubes.

4. Dispositif selon la revendication 3, **caractérisé en ce que** des groupes de tubes voisins d'un évaporateur sont traversés à chaque fois en sens opposé.

5. Dispositif selon la revendication 3 ou 4, **caractérisé en ce que** le premier et le deuxième évaporateurs sont traversés en sens opposé, suivant une direction perpendiculaire aux groupes de tubes.

6. Dispositif selon la revendication 1, **caractérisé en ce que** le deuxième et le troisième évaporateurs sont configurés comme un ensemble unitaire.

7. Dispositif selon l'une quelconque des revendications précédentes, **caractérisé en ce qu'**un premier élément de séparation (7) est disposé côté sortie de flux de l'éjecteur (4), lequel élément de séparation divise le flux de fluide frigorigène en un premier flux partiel et en un deuxième flux partiel.

8. Dispositif selon la revendication 7, **caractérisé en ce que** la teneur en liquide du premier flux partiel est supérieure ou pratiquement égale à la teneur en liquide du deuxième flux partiel.

9. Dispositif selon l'une des revendications 7 ou 8, **caractérisé en ce que** le premier élément de séparation forme un ensemble unitaire avec l'éjecteur (4).

10. Dispositif selon l'une quelconque des revendications 7 à 9, **caractérisé en ce que** l'élément de séparation est relié en communiquant avec une conduite qui relie le deuxième et le troisième évaporateurs communiquant l'un avec l'autre.

11. Dispositif selon l'une quelconque des revendications précédentes, **caractérisé en ce qu'**un deuxième élément des séparation (19) est disposé côté sortie de flux du premier élément de séparation et côté entrée de flux du premier évaporateur.

12. Dispositif selon la revendication 11, **caractérisé en ce que** le deuxième élément de séparation est relié en communiquant avec une conduite qui relie le deuxième et le troisième évaporateurs communiquant avec l'autre.

13. Dispositif selon la revendication 11, **caractérisé en ce que** le deuxième élément de séparation est relié à une conduite qui relie le deuxième évaporateur au compresseur en les faisant communiquer l'un avec l'autre.

14. Procédé de fonctionnement d'un dispositif selon l'une des revendications précédentes, **caractérisé en ce qu'**un élément d'étranglement (9) est disposé côté entrée de flux du premier évaporateur (5), et un coefficient de débit A de l'élément d'étranglement est réglé de manière telle, qu'il ne se produise aucune zone de surchauffe au niveau du premier évaporateur (5), concernant tous les points de fonctionnement du dispositif.

Fig. 1

EP 2 223 815 B1

Fig. 2

Fig. 3

Fig. 4

EP 2 223 815 B1

Fig. 5

EP 2 223 815 B1

Fig. 6

EP 2 223 815 B1

Fig. 7

Fig. 8

Fig. 9

Fig. 10

Fig. 11

EP 2 223 815 B1

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0487002 A2
- DE 102005021396

- EP 1719650 A